# EUROPEAN PATENT SPECIFICATION

(11) **EP 3 359 399 B1**
(45) Date of publication and mention of the grant of the patent: **04.12.2019**
(21) Application number: 16812874.2
(22) Date of filing: 06.10.2016
(51) Int. Cl.: B60C 23/00, B60C 23/06

(54) **PROCESS AND DEVICE FOR CONTROL AND REGULATION OF THE PRESSURE OF TYRES**
VERFAHREN UND VORRICHTUNG ZUR STEUERUNG UND REGELUNG DES REIFENDRUCKS
PROCÉDÉ ET DISPOSITIF DE CONTRÔLE ET DE RÉGULATION DE LA PRESSION DE PNEUMATIQUES

(30) Priority: 06.10.2015 IT UA20154063
(43) Date of publication of application: 15.08.2018
(73) Proprietor: Trelleborg Wheel Systems Italia S.p.A., 00010 Villa Adriana - Tivoli (RM) (IT)
(72) Inventor: MANCINELLI, Piero, 00019 Tivoli (RM) (IT); LIMITI, Massimo, 00019 Tivoli (RM) (IT); BELTRAMME, Domiziano, 00019 Tivoli (RM) (IT)
(74) Representative: Santi, Filippo
(86) International application number: PCT/IT2016/000229
(87) International publication number: WO 2018/033942

(56) References cited:
- EP-A1- 2 818 337
- EP-A2- 1 449 684
- US-A1- 2005 097 949
- US-B1- 6 339 956

## Description

The present invention concerns a process of control and regulation of the pressure of tyres.

The invention concerns in particular the field of tyres for agricultural use, but can be used in all applications that need a control of the pressure of the tyres and in which there exists the need to adjust the pressure depending on the use.

It is known that tyres for agricultural applications have among the most popular targets the obtaining of the correct performance on the field and on the road, which is connected to the need to have an appropriate value of pressure of inflation.

In the case where tyres are used on agricultural machines operated with high and time-varying loads, this is more necessary than ever.

Making reference to the machines of high dimensions (harvesters, sprayers, spreader, trailers and tractors), it is clear that the same are subjected to cycles of loading and unloading and as a result divide on the tyres a force which varies from a minimum (Lmin) under conditions in which the machine is discharged, up to a maximum (Lmax) when the machine is at full load. By varying the force applied and at a constant pressure, the shape of the tyre is changed, assuming a profile flatter and flatter with increasing load. The change of the profile of the tyre also involves the change of the footprint on the ground, also said footprint, of the same and, consequently, its adherence.

According to EP1449684 it is disclosed a relates to a method for controlling the movement of a vehicle including at least one wheel provided with a tyre, the said method comprising the steps of:
- determining the deformations of the said tyre by measuring them by means of the reflection of a signal emitted inside the wheel;
- providing a database containing values of deformation of the tyre which correspond to a predetermined behaviour of the wheel;
- comparing the said measured deformations with the said predetermined values of deformation; and
- emitting a signal dependent on the result of the said comparison, to be used for controlling the behaviour of the vehicle.

In particular, the aforesaid method is implemented by means of the following steps:
- measuring the extent of the characteristic deformations of the casing profile of at least one tyre fitted on the vehicle, at a given inflation pressure;
- comparing the values of these characteristic deformations with stored values representing the behaviour of the tyre in the measured state of deformation; and
- generating a signal for acting on at least one device regulating at least one mechanism for controlling the behaviour, including attitude, of the said vehicle in motion, corresponding to the action to be taken on the said mechanism to keep the said behaviour of the vehicle within the limits of a predetermined behaviour or to bring it back within these limits.

Moreover, US2005/097949 discloses a system for monitoring a vehicle with pneumatic tyres, comprising:
- a pressure sensor disposed to sense a tyre inflation pressure of at least one wheel of the vehicle and to output a sensor output signal;
- a deformation sensor for sensing deformations of a tyre, joined to a sidewall of the tyre at a location that is subject to strong deformation when a pneumatic pressure in the tyre is too low in relation to a weight of the vehicle, said deformation sensor generating an output signal in dependence on the deformation of the sidewall;
- an analysis unit;
- a data transmission device for transmitting the sensor output signal of said pressure sensor and the output signal of said deformation sensor to said analysis unit;
- said analysis unit including a filtering device configured to subject the output signal from said deformation sensor to low-frequency filtering in dependence on a speed of rotation of the wheel, to generate a signal substantially corresponding to a quasi-static tyre deformation, and to highfrequency filtering in dependence on the speed of rotation of the wheel, to generate a signal characterising a nature of a road surface.

None of the previously described solutions allow to adjust the pressure of a tyre, in particular a tyre for agricultural machines, in an optimized way, taking into account all the parameters involved in the adaptation.

In this context it is included the solution according to the present invention, which aims to ensure the possibility of adjusting the pressure of a tyre, in particular a tyre for agricultural machines, with the aim to adapt the footprint to the variation of load, by suitably modifying the internal pressure.

For this purpose, according to the present invention are proposed a process and a device of control and regulation of the pressure of tyres, in particular tyres for agricultural use, where the objective to adapt the footprint, changing the internal pressure when the load imposed on the tyre varies, is reached by calibrating the footprint itself or the flattening under load of the tyre. This aim is achieved by the controlling of the footprint or of the deflection and the adjustment of the pressure, depending on the temperature, through a series of gauges in conjunction with an electronic system that, as a function of the measurements made, acts consequently on a compressor or a release valve.

The purpose of the present invention is therefore to provide a process and a device of control and regulation of the pressure of tyres, in particular tyres for agricultural use, which allows not to exceed the limits of the control systems according to the prior art and to obtain the previously described technical results.

A further object of the invention is that said process and said device of control and regulation of the pressure of tyres can be implemented with substantially limited costs, both as regards production costs and as regards operating costs.

Another object of the invention is to propose a process and a device of control and regulation of the pressure of tyres, in particular tyres for agricultural use, which is simple, safe and reliable.

It is therefore a first object of the present invention a process of control and regulation of the pressure of tyres, in particular for agricultural use, apt to ensure the adaptation of the footprint of a tyre to changes in the load applied thereto, characterised in that it comprises the following steps:
- measuring the pressure of the tyre,
- measuring the footprint or the deflection of the tyre,
- determining a calculated value of the load applied to said tyre, said calculated value of the applied load being determined, in function of said measured value of the footprint or of the deflection and of said measured value of the pressure, by means of a correlation, based on experimental data, of values of pressure, footprint or deflection and applied load,
- determining an optimum value of pressure corresponding to said calculated value of the applied load, said optimum value of pressure being determined by means of characteristic tables of said tyre,
- determining a calculated value of footprint or of deflection in function of said optimum value of pressure, said calculated value of footprint or of deflection being determined by means of a correlation, based on experimental data, of values of pressure, footprint or deflection and applied load,
   if said calculated value of footprint or deflection is different from respectively said measured value of footprint or deflection:
- modifying the pressure of the tyre to reduce the difference between said measured value of pressure and said optimum value of pressure,
repeating the steps of the process until said measured value of the footprint or of the deflection reaches said calculated value of the footprint or of the deflection.

Preferably, according to the invention, said process additionally comprises a step of measuring the temperature, the measured values of temperature contributing to the determination of the correlation between values of footprint or of deflection, pressure and load.

It is moreover a second object of the present invention a device of control and regulation of the pressure of tyres, in particular for agricultural use, apt to ensure the adaptation of the footprint of a tyre to changes in the load applied thereto, comprising a pressure meter and a footprint meter or a deflection meter of a tyre, an electronic management system, connected in input to said pressure meter and to said deflection meter or footprint meter, a compressor, actuated by said electronic management system, a release and safety valve, actuated by said electronic management system, and a power supply system, said electronic management system being configured to:
- determining continuously a value of the applied load on said tyre, in function of said measured value of the footprint or of the deflection and of said measured value of the pressure, by means of a correlation, based on experimental data, of values of pressure, footprint or deflection and applied load,
- determining an optimum value of pressure corresponding to said calculated value of the applied load, said optimum value of pressure being determined by means of characteristic tables of said tyre,
- determining a calculated value of footprint or of deflection in function of said optimum value of pressure, said calculated value of footprint or of deflection being determined by means of a correlation, based on experimental data, of values of pressure, footprint or deflection and applied load, and
   if said calculated value of footprint or deflection is different from respectively said measured value of footprint or deflection:
- modifying the pressure of the tyre to reduce the difference between said measured value of pressure and said optimum value of pressure,
repeating the steps of the process until when said measured value of the footprint or of the deflection reaches said calculated value of the footprint or of the deflection.

Preferably, according to the present invention, said footprint meter comprises:
- accelerometers, or
- polymeric material having electrical resistance variable according to deformation.

Preferably, according to the present invention, said device of control and regulation of the pressure of tyres comprises in particular one of the following measurement instrument of the deflection:
- an extensometer
- a laser system
- an infrared system.

Preferably, according to the present invention, said device of control and regulation of the pressure of tyres additionally comprises a temperature meter.

Moreover, according to the present invention, said power supply system can comprise a battery integral with a hub of the wheel or can be apt to get energy directly from the vehicle on which said tyre is installed.

Moreover, according to the present invention, said power supply system can be provided with a pair of collectors, one for the negative pole and one for the positive pole, connected by means of sliding contact with as many brushes as are needed to assure the operation of the device, in turn electrically connected to the vehicle, or of a three-phase motor, comprising a stator and a rotor, in turn electrically connected to the vehicle.

Finally, the device of control and regulation of the pressure of tyres according to the invention, is advantageously applied to agricultural machines used with heavy loads varying in time, such as harvesters, sprayers, spreaders and trailers.

It is evident the effectiveness of the process and the device of the present invention, that allow to adapt the footprint on the ground of a tyre to the varying of the applied load by means of the control of parameters that can be measured through simple and cheap detectors.

The present invention will be now described, for illustrative but not limitative purposes, according to its preferred embodiment, with particular reference to the annexed figures, in which:

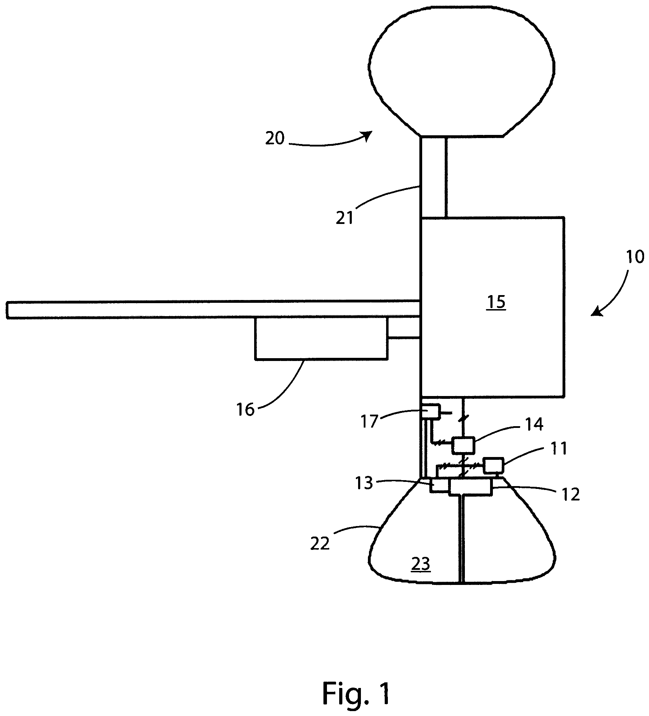

- Figure 1 shows a radial sectional view of a wheel incorporating a process of control and regulation of the pressure of tyres according to the present invention;
- Figure 2 shows the cycle of control and regulation of the pressure in function of an increase of the load;
- Figure 3 shows the cycle of control and regulation of the pressure in function of a decrease of the load;
- Figure 4 shows the rim of a tyre according to an embodiment of the present invention, and a corresponding collector; and
- Figure 5 shows a representative diagram of the typical loading and unloading cycle of a harvesters.

Referring to the figures, a device of control and regulation of the pressure of tyres according to a preferred embodiment of the present invention is indicated by the reference number 10 and is shown applied on a wheel 20, essentially consisting of a rim 21 and a tyre 22, inside which it is defined an air chamber 23.

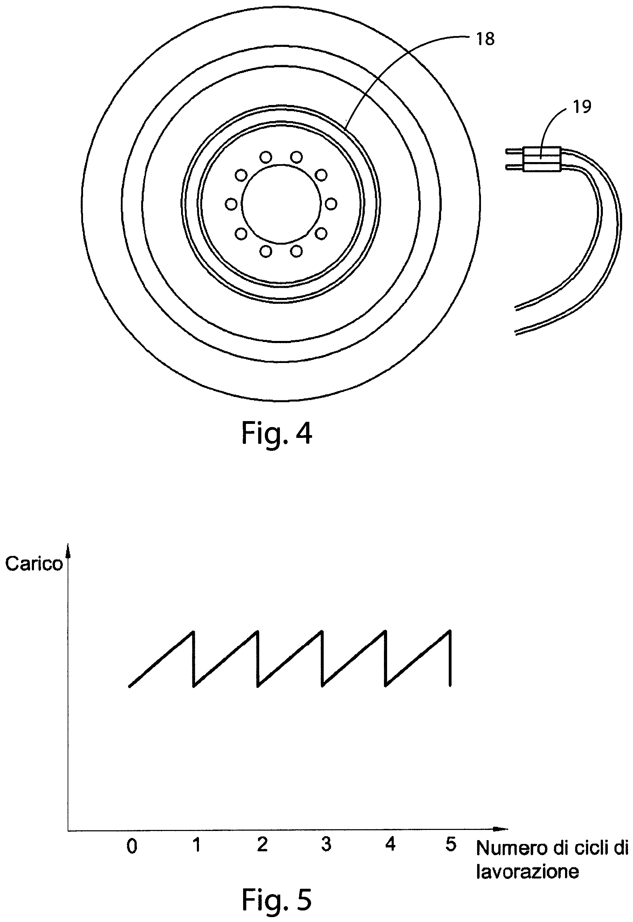

The device of control and regulation of the pressure of tyres according to the present invention comprises a pressure meter 11, a deflection meter 12 of the tyre 22 (or alternatively a footprint meter), a temperature meter 13, an electronic management system 14, a compressor 1 5 and a power supply system 16. In addition, the device of control and regulation of the pressure of tyres according to the present invention includes a release and safety valve 17. The power supply system 16 can be constituted by a battery integral with the hub of the wheel, or, as shown by way of example but not of limitation with reference to Figure 4, can extract energy directly from the vehicle on which said tyre is installed, for example through a pair of collectors 18, one for the negative pole and one for the positive pole, connected by means of sliding contact with as many brushes 19 as are required to ensure operation of the whole device, in turn electrically connected to the vehicle engine.

Given the architecture of the device of control and regulation of the pressure of tyres according to the present invention, the same is particularly suited to harvesters (and harvesters/sprayers), considering both the frequent and high variability of the load during the working cycles, and its possible allocation within the rim.

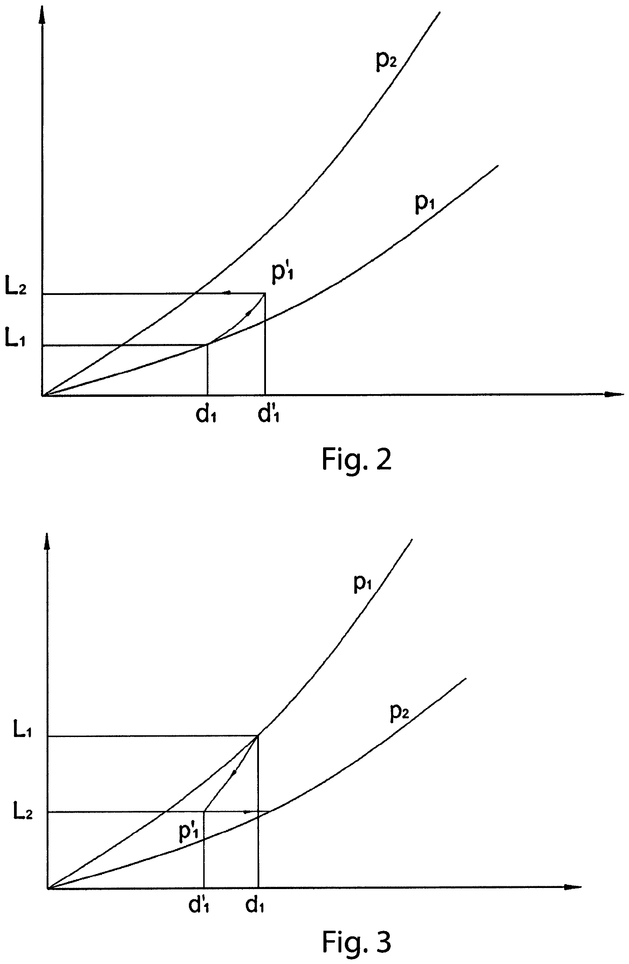

The operation of the process and device of control and regulation of the pressure of tyres according to the present invention is described in the following, with reference to Figures 2 and 3, which show two diagrams in which the abscissa axis shows the deflection of the tyre and the ordinate axis shows the load condition. The two curves p1 and p2 show the relationship between the deflection and the load condition, respectively, for two constant pressure values p1 and p2. The operation of the process and the device of control and regulation of the pressure of tyres according to the present invention is explained in detail by referring to the measurement of the deflection, but perfectly similar reasoning can be made in the case in which the measured parameter is the footprint of the tyre.

In particular, referring to Figure 2, starting from an initial load condition L1, the pressure and the deflection are respectively p1 and d1. By increasing the load up to L2, the two variables increase, respectively up to p1' and d1'. The regulation device consequently actuates a compressor, capable of increasing the pressure up to p2 in order to obtain the suitable value of deflection. The Δp to be imposed is known from the experimental tests carried out on the covering, which relate L, p and d.

The process is similar in the case of reduction of the load, with a reduction of the pressure rather than an increase, as shown with reference to Figure 3.

By way of example, Figure 5 represent a loading and unloading cycle typical of a harvesters.

The present invention has been described for illustrative but not limitative purposes, according to its preferred embodiments, but it is to be understood that variations and/or modifications may be made by those skilled in the art without departing from the relative scope of protection, as defined by the appended claims.

## Claims

1. Process of control and regulation of the pressure of tyres, in particular for agricultural use, apt to ensure the adaptation of the footprint of a tyre to changes in the load applied thereto, **characterised in that** it comprises the following steps:
- measuring the pressure of the tyre,
- measuring the footprint or the deflection of the tyre,
- determining a calculated value of the load applied to said tyre, said calculated value of the applied load being determined, in function of said measured value of the footprint or of the deflection and of said measured value of the pressure, by means of a correlation, based on experimental data, of values of pressure, footprint or deflection and applied load,
- determining an optimum value of pressure corresponding to said calculated value of the applied load, said optimum value of pressure being determined by means of characteristic tables of said tyre,
- determining a calculated value of footprint or of deflection in function of said optimum value of pressure, said calculated value of footprint or of deflection being determined by means of a correlation, based on experimental data, of values of pressure, footprint or deflection and applied load,
if said calculated value of footprint or of deflection is different from respectively said measured value of footprint or of deflection:
- modifying the pressure of the tyre to reduce the difference between said measured value of pressure and said optimum value of pressure,
repeating the steps of the process until said measured value of the footprint or of the deflection reaches said calculated value of the footprint or of the deflection.

2. Process of control and regulation of the pressure of tyres according to claim 1, **characterised in that** it additionally comprises a step of measuring the temperature, the measured values of temperature contributing to the determination of the correlation between values of footprint or of deflection, pressure and load.

3. Device (10) of control and regulation of the pressure of tyres (22), in particular for agricultural use, apt to ensure the adaptation of the footprint of a tyre to changes in the load applied thereto, comprising a pressure meter (11) and a footprint meter or a deflection meter (12) of a tyre (22), an electronic management system (14), connected in input to said pressure meter (11) and to said footprint meter (12) or deflection meter, a compressor (15), actuated by said electronic management system (14), a release and safety valve (17), actuated by said electronic management system (14), and a power supply system (16), **characterised in that** said electronic management system (14) is configured to:
- determine continuously a value of the applied load on said tyre (22), in function of said measured value of the footprint or of the deflection and of said measured value of the pressure, by means of a correlation, based on experimental data, of values of pressure, footprint or deflection and applied load,
- determine an optimum value of pressure corresponding to said calculated value of the applied load, said optimum value of pressure being determined by means of characteristic tables of said tyre,
- determine a calculated value of footprint or of deflection in function of said optimum value of pressure, said calculated value of footprint or of deflection being determined by means of a correlation, based on experimental data, of values of pressure, footprint or deflection and applied load, and
if said calculated value of footprint or deflection is different from respectively said measured value of footprint or deflection:
- modify the pressure of the tyre to reduce the difference between said measured value of pressure and said optimum value of pressure,
repeating the steps of the process until when said measured value of the footprint or of the deflection reaches said calculated value of the footprint or of the deflection.

4. Device (10) of control and regulation of the pressure of tyres (22) according to claim 3, **characterised in that** said footprint meter comprises:
- accelerometers, or
- polymeric material having electrical resistance variable according to deformation.

5. Device (10) of control and regulation of the pressure of tyres (22) according to claim 3, **characterised in that** said deflection meter comprises:
- an extensometer, or
- a laser system, or
- an infrared system.

6. Device (10) of control and regulation of the pressure of tyres (22) according to anyone of claims 3-5, **characterised in that** it additionally comprises a temperature meter (13).

7. Device (10) of control and regulation of the pressure of tyres (22) according to anyone of claims 3-6, **characterised in that** said power supply system (14) consists in a battery integral with the hub of the wheel of a vehicle on which said tyre is installed.

8. Device (10) of control and regulation of the pressure of tyres (22) according to anyone of claims 3-7, **characterised in that** said power supply system (14) is apt to get energy directly from the vehicle on which said tyre is installed.

9. Device (10) of control and regulation of the pressure of tyres (22) according to claim 8, **characterised in that** said power supply system (14) is provided with a pair of collectors (18), one for the negative pole and one for the positive pole, connected by means of sliding contact with as many brushes (19) as are required to ensure operation of the whole device (10), in turn electrically connected to the vehicle engine.

10. Device (10) of control and regulation of the pressure of tyres (22) according to claim 8, **characterised in that** said power supply system is provided with a three-phase motor, comprising a stator and a rotor, in turn electrically connected to the vehicle.

11. Device (10) of control and regulation of the pressure of tyres (22) according to anyone of claims 3-10, **characterised in that** it is applied to agricultural machines used with heavy loads varying in time, such as harvesters, sprayers, spreaders and trailers.

## Patentansprüche

1. Verfahren zur Steuerung und Regelung des Drucks von Reifen, insbesondere für eine landwirtschaftliche Nutzung, geeignet, um die Anpassung des Abdrucks eines Reifens an Änderungen in der darauf ausgeübten Belastung sicherzustellen, **dadurch gekennzeichnet, dass** es die folgenden Schritte umfasst:
- Messen des Reifendrucks,
- Messen des Abdrucks oder der Einfederung des Reifens,
- Bestimmen eines berechneten Werts der auf den Reifen ausgeübten Belastung, wobei der berechnete Wert der ausgeübten Belastung in Abhängigkeit von dem gemessenen Wert des Abdrucks oder der Einfederung und von dem gemessenen Wert des Drucks bestimmt wird, mittels einer Korrelation, basierend auf Versuchsdaten von Werten des Drucks, des Abdrucks oder der Einfederung und der ausgeübten Belastung,
- Bestimmen eines optimalen Druckwerts entsprechend dem berechneten Wert der ausgeübten Belastung, wobei der optimale Druckwert mittels Merkmalstabellen des Reifens bestimmt wird,
- Bestimmen eines berechneten Werts des Abdrucks oder der Einfederung in Abhängigkeit von dem optimalen Druckwert, wobei der berechnete Wert des Abdrucks oder der Einfederung mittels einer Korrelation bestimmt wird, basierend auf Versuchsdaten von Werten des Drucks, des Abdrucks oder der Einfederung und der ausgeübten Belastung,
wenn sich der berechnete Wert des Abdrucks oder der Einfederung jeweils von dem gemessenen Wert des Abdrucks oder der Einfederung unterscheidet:
- Ändern des Reifendrucks, um die Differenz zwischen dem gemessenen Druckwert und dem optimalen Druckwert zu verringern,
Wiederholen der Schritte des Verfahrens, bis der gemessene Wert des Abdrucks oder der Einfederung den berechneten Wert des Abdrucks oder der Einfederung erreicht.

2. Verfahren zur Steuerung und Regelung des Drucks von Reifen nach Anspruch 1, **dadurch gekennzeichnet, dass** es zusätzlich einen Schritt des Messens der Temperatur umfasst, wobei die gemessenen Temperaturwerte zu der Bestimmung der Korrelation zwischen Werten des Abdrucks oder der Einfederung, des Drucks und der Belastung beitragen.

3. Vorrichtung (10) zur Steuerung und Regelung des Drucks von Reifen (22), insbesondere für eine landwirtschaftliche Nutzung, geeignet, um die Anpassung des Abdrucks eines Reifens an Änderungen in der darauf ausgeübten Belastung sicherzustellen, umfassend einen Druckmesser (11) und einen Abdruckmesser oder einen Einfederungsmesser (12) eines Reifens (22), ein elektronisches Verwaltungssystem (14), das im Eingang an den Druckmesser (11) und an den Abdruckmesser (12) oder den Einfederungsmesser angeschlossen ist, einen Verdichter (15), der von dem elektronischen Verwaltungssystem (14) betätigt wird, ein Entlastungs- und Sicherheitsventil (17), das von dem elektronischen Verwaltungssystem (14) betätigt wird, und ein Stromversorgungssystem (16), **dadurch gekennzeichnet, dass** das elektronische Verwaltungssystem (14) ausgestaltet ist zum:
- kontinuierlichen Bestimmen eines Werts der ausgeübten Belastung auf den Reifen (22) in Abhängigkeit von dem gemessenen Wert des Abdrucks oder der Einfederung und von dem gemessenen Wert des Drucks mittels einer Korrelation, basierend auf Versuchsdaten von Werten des Drucks, des Abdrucks oder der Einfederung und der ausgeübten Belastung,
- Bestimmen eines optimalen Druckwerts entsprechend dem berechneten Wert der ausgeübten Belastung, wobei der optimale Druckwert mittels Merkmalstabellen des Reifens bestimmt wird,
- Bestimmen eines berechneten Werts des Abdrucks oder der Einfederung in Abhängigkeit von dem optimalen Druckwert, wobei der berechnete Wert des Abdrucks oder der Einfederung mittels einer Korrelation bestimmt wird, basierend auf Versuchsdaten von Werten des Drucks, des Abdrucks oder der Einfederung und der ausgeübten Belastung, und
wenn sich der berechnete Wert des Abdrucks oder der Einfederung jeweils von dem gemessenen Wert des Abdrucks oder der Einfederung unterscheidet:
- Ändern des Reifendrucks, um die Differenz zwischen dem gemessenen Druckwert und dem optimalen Druckwert zu verringern,
Wiederholen der Schritte des Verfahrens, bis der gemessene Wert des Abdrucks oder der Einfederung den berechneten Wert des Abdrucks oder der Einfederung erreicht.

4. Vorrichtung (10) zur Steuerung und Regelung des Drucks von Reifen (22) nach Anspruch 3, **dadurch gekennzeichnet, dass** der Abdruckmesser umfasst:
- Beschleunigungsmesser oder
- Polymermaterial, das einen elektrischen Widerstand aufweist, der gemäß einer Verformung variabel ist.

5. Vorrichtung (10) zur Steuerung und Regelung des Drucks von Reifen (22) nach Anspruch 3, **dadurch gekennzeichnet, dass** der Einfederungsmesser umfasst:
- einen Dehnungsmesser oder
- ein Lasersystem oder
- ein Infrarotsystem.

6. Vorrichtung (10) zur Steuerung und Regelung des Drucks von Reifen (22) nach einem der Ansprüche 3-5, **dadurch gekennzeichnet, dass** sie zusätzlich einen Temperaturmesser (13) umfasst.

7. Vorrichtung (10) zur Steuerung und Regelung des Drucks von Reifen (22) nach einem der Ansprüche 3-6, **dadurch gekennzeichnet, dass** das Stromversorgungssystem (14) aus einer Batterie besteht, die in die Radnabe eines Fahrzeugs eingebaut ist, auf dem der Reifen angebracht ist.

8. Vorrichtung (10) zur Steuerung und Regelung des Drucks von Reifen (22) nach einem der Ansprüche 3-7, **dadurch gekennzeichnet, dass** das Stromversorgungssystem (14) geeignet ist, Energie direkt von dem Fahrzeug zu bekommen, auf dem der Reifen angebracht ist.

9. Vorrichtung (10) zur Steuerung und Regelung des Drucks von Reifen (22) nach Anspruch 8, **dadurch gekennzeichnet, dass** das Stromversorgungssystem (14) mit einem Paar von Kollektoren (18) ausgestattet ist, einer für den Minuspol und einer für den Pluspol, die mittels eines Schleifkontakts mit so vielen Bürsten (19) verbunden sind, wie nötig sind, um einen Betrieb der gesamten Vorrichtung (10) sicherzustellen, die wiederum elektrisch an den Fahrzeugmotor angeschlossen ist.

10. Vorrichtung (10) zur Steuerung und Regelung des Drucks von Reifen (22) nach Anspruch 8, **dadurch gekennzeichnet, dass** das Stromversorgungssystem mit einem Drehstrommotor ausgestattet ist, umfassend einen Stator und einen Rotor, der wiederum elektrisch an das Fahrzeug angeschlossen ist.

11. Vorrichtung (10) zur Steuerung und Regelung des Drucks von Reifen (22) nach einem der Ansprüche 3-10, **dadurch gekennzeichnet, dass** sie auf landwirtschaftlichen Maschinen angewendet wird, die mit zeitlich variierenden Schwerlasten genutzt werden, wie etwa Mähdreschern, Feldspritzen, Streumaschinen und Anhängern.

## Revendications

1. Procédé de commande et de régulation de la pression de pneus, en particulier pour un usage agricole, apte à assurer l'adaptation de l'empreinte d'un pneu aux changements de charge appliquée à celui-ci, **caractérisé en ce qu'**il comprend les étapes suivantes :
- la mesure de la pression du pneu,
- la mesure de l'empreinte ou la déflexion du pneu,
- la détermination d'une valeur calculée de la charge appliquée audit pneu, ladite valeur calculée de la charge appliquée étant déterminée, en fonction de ladite valeur mesurée de l'empreinte ou de la déflexion et de ladite valeur mesurée de la pression, au moyen d'une corrélation, sur la base de données expérimentales, de valeurs de pression, d'empreinte ou de déflexion et de charge appliquée,
- la détermination d'une valeur optimum de pression correspondant à ladite valeur calculée de la charge appliquée, ladite valeur optimum de pression étant déterminée au moyen de tableaux caractéristiques dudit pneu,
- la détermination d'une valeur calculée d'empreinte ou de déflexion en fonction de ladite valeur optimum de pression, ladite valeur calculée d'empreinte ou de déflexion étant déterminée au moyen d'une corrélation, sur la base de données expérimentales, de valeurs de pression, d'empreinte, ou de déflexion et de charge appliquée,
si ladite valeur calculée d'empreinte ou de déflexion est différente respectivement de ladite valeur mesurée d'empreinte ou de déflexion :
- la modification de la pression du pneu pour réduire la différence entre ladite valeur de pression mesurée et ladite valeur optimum de pression,
la répétition des étapes du procédé jusqu'à ce que ladite valeur mesurée de l'empreinte ou de la déflexion atteigne ladite valeur calculée de l'empreinte ou de la déflexion.

2. Procédé de commande et de régulation de la pression de pneus selon la revendication 1, **caractérisé en ce qu'**il comprend additionnellement une étape de mesure de la température, les valeurs mesurées de température contribuant à la détermination de la corrélation entre des valeurs d'empreinte ou de déflexion, de pression et de charge.

3. Dispositif (10) de commande et de régulation de la pression de pneus (22), en particulier pour un usage agricole, apte à assurer l'adaptation de l'empreinte d'un pneu aux changements de charge appliquée à celui-ci, comprenant un manomètre (11) et un appareil de mesure d'empreinte ou un appareil de mesure de déflexion (12) d'un pneu (22), un système de gestion électronique (14), raccordé en entrée audit manomètre (11) et audit appareil de mesure d'empreinte (12) ou appareil de mesure de déflexion, un compresseur (15), actionné par ledit système de gestion électronique (14), une valve de libération et de sécurité (17), actionnée par ledit système de gestion électronique (14) et un système d'alimentation en énergie (16), **caractérisé en ce que** ledit système de gestion électronique (14) est configuré pour :
- déterminer en continu une valeur de la charge appliquée sur ledit pneu (22), en fonction de ladite valeur mesurée de l'empreinte ou de la déflexion et de ladite valeur mesurée de la pression, au moyen d'une corrélation, sur la base de données expérimentales, de valeurs de pression, d'empreinte ou de déflexion et de charge appliquée,
- déterminer une valeur optimum de pression correspondant à ladite valeur calculée de la charge appliquée, ladite valeur optimum de pression étant déterminée au moyen de tableaux caractéristiques dudit pneu,
- déterminer une valeur calculée d'empreinte ou de déflexion en fonction de ladite valeur optimum de pression, ladite valeur calculée d'empreinte ou de déflexion étant déterminée au moyen d'une corrélation, sur la base de données expérimentales, de valeurs de pression, d'empreinte ou de déflexion et de charge appliquée, et
si ladite valeur calculée d'empreinte ou de déflexion est différente respectivement de ladite valeur mesurée d'empreinte ou de déflexion :
- modifier la pression du pneu pour réduire la différence entre ladite valeur mesurée de pression et ladite valeur optimum de pression,
en répétant les étapes du procédé jusqu'au moment où ladite valeur mesurée de l'empreinte ou de la déflexion atteint ladite valeur calculée de l'empreinte ou de la déflexion.

4. Dispositif (10) de commande et de régulation de la pression de pneus (22) selon la revendication 3, **caractérisé en ce que** ledit appareil de mesure d'empreinte comprend :
- des accéléromètres, ou
- du matériau polymérique présentant une résistance électrique variable selon la déformation.

5. Dispositif (10) de commande et de régulation de la pression de pneus (22) selon la revendication 3, **caractérisé en ce que** ledit appareil de mesure de déflexion comprend :
- un extensomètre ou
- un système laser ou
- un système à infrarouge.

6. Dispositif (10) de commande et de régulation de la pression de pneus (22) selon l'une quelconque des revendications 3 à 5, **caractérisé en ce qu'**il comprend additionnellement un capteur de température (13).

7. Dispositif (10) de commande et de régulation de la pression de pneus (22) selon l'une quelconque des revendications 3 à 6, **caractérisé en ce que** ledit système d'alimentation en énergie (14) se compose d'une batterie d'un seul tenant avec le moyeu de la roue d'un véhicule sur lequel ledit pneu est installé.

8. Dispositif (10) de commande et de régulation de la pression de pneus (22) selon l'une quelconque des revendications 3 à 7, **caractérisé en ce que** ledit système d'alimentation en énergie (14) est apte à obtenir de l'énergie directement du véhicule sur lequel ledit pneu est installé.

9. Dispositif (10) de commande et de régulation de la pression de pneus (22) selon la revendication 8, **caractérisé en ce que** ledit système d'alimentation en énergie (14) est doté d'une paire de collecteurs (18), un pour le pôle négatif et un pour le pôle positif, raccordés par contact coulissant avec autant de brosses (19) qu'elles sont requises pour assurer le fonctionnement du dispositif entier (10), raccordé électriquement à son tour au moteur de véhicule.

10. Dispositif (10) de commande et de régulation de la pression de pneus (22) selon la revendication 8, **caractérisé en ce que** ledit système d'alimentation en énergie est doté d'un moteur triphasé, comprenant un stator et un rotor, raccordés à leur tour électriquement au véhicule.

11. Dispositif (10) de commande et de régulation de la pression de pneus (22) selon l'une quelconque des revendications 3 à 10, **caractérisé en ce qu'**il est appliqué aux machines agricoles utilisées avec des charges lourdes variant dans le temps telles que des moissonneuses, pulvérisateurs, épandeurs et remorques.
